# EUROPEAN PATENT APPLICATION

(11) **EP 3 490 252 A1**
(43) Date of publication of application: **29.05.2019**
(21) Application number: 18199080.5
(22) Date of filing: 08.10.2018
(51) Int. Cl.: H04N 9/73, H04N 5/225

(54) **METHOD AND DEVICE FOR IMAGE WHITE BALANCE, STORAGE MEDIUM AND ELECTRONIC EQUIPMENT**

(30) Priority: 28.11.2017 CN 201711212789
(71) Applicant: Guangdong Oppo Mobile Telecommunications Corp., Ltd, Dongguan, Guangdong 523860 (CN)
(72) Inventor: SUN, Jianbo, Dongguan, Guangdong 523860 (CN)
(74) Representative: Manitz Finsterwald Patent- und Rechtsanwaltspartnerschaft mbB

(57) **Abstract**

Disclosed are a method and device for image white balance, a storage medium and electronic equipment. According to the method, an image to be processed generated by a first camera is acquired. Environmental information, obtained by the first camera and a second camera, of the image to be processed is acquired. White balance data is calculated according to the environmental information. White balance processing is performed on the image to be processed according to the white balance data.

## Description

### TECHNICAL FIELD

The invention relates to image white balance, and more particularly, to a method and device for image white balance, a storage medium and electronic equipment.

### BACKGROUND

When photographic equipment shoots an object, the object shot in different light environments is presented in different colors. Therefore, it is necessary to perform Auto White Balance (AWB) processing on a shot image so as to avoid color distortion of the shot object. White balance is an index for describing accuracy of white generated by mixing three primary colors, i.e., Red, Green and Blue (RGB), in a display.

A related method for image white balance is to adopt a preset white balance algorithm to perform AWB processing on an image on the basis of existing environmental information in the image which is shot and generated, thereby generating a white balance processed image. However, the environmental information obtained from the shot image is limited, and thus a color of a shot object may not be accurately restored by the related method.

### SUMMARY

The invention provides a method and device for image white balance, a storage medium and electronic equipment, which may improve accuracy of color restoration of a shot object.

In an aspect, a method for image white balance is provided. An image to be processed generated by a first camera is acquired. Environmental information, obtained by the first camera and a second camera, of the image to be processed is acquired. White balance data is calculated according to the environmental information. White balance processing is performed on the image to be processed according to the white balance data.

In another aspect, a device for image white balance is provided, including an image acquisition module, configured to acquire an image to be processed generated by a first camera; an environmental information generation module, configured to acquire environmental information, obtained by the first camera and a second camera, of the image to be processed; and a white balance processing module, configured to calculate white balance data according to the environmental data and perform white balance processing on the image to be processed according to the white balance data.

A computer program may be stored on a computer-readable storage medium. The computer program may be executed by a processor to implement the steps of the method in each of embodiments of the invention.

Electronic equipment may include a memory, a processor and a computer program stored in the memory and capable of running on the processor. The processor may execute the computer program to implement the steps of the method in each of embodiments of the invention.

According to the method and device for image white balance, the storage medium and the electronic equipment provided by the embodiments of the invention, when an image is shot, the first camera and the second camera are simultaneously turned on, the image to be processed generated by the first camera is acquired, the environmental information, obtained by the first camera and a second camera, of the image to be processed is acquired, the white balance data is calculated according to the environmental information, and white balance processing is performed on the image to be processed according to the white balance data. In a shooting process, the second camera is also adopted, and the first camera and the second camera cooperate to obtain the environmental information of the image to be processed, so that more reference information is provided for calculation of the white balance data. Accuracy of the calculated white balance data is improved. White balance processing is further performed on the image to be processed according to the white balance data, so that image white balance processing accuracy is also improved accordingly.

### BRIEF DESCRIPTION OF DRAWINGS

In order to describe the technical solutions in the embodiments of the invention or a related art more clearly, the drawings required to be used in descriptions about the embodiments or the related art will be simply introduced below. It is apparent that the drawings described below are only some embodiments of the invention. Other drawings may further be obtained by those of ordinary skilled in the art according to these drawings without creative work.
FIG. 1 is a diagram of an invention environment of a method for image white balance according to an embodiment.
FIG. 2 is an internal structure diagram of electronic equipment according to an embodiment.
FIG. 3 is a flowchart of a method for image white balance according to an embodiment.
FIG. 4A is a schematic diagram of an image to be processed according to an embodiment.
FIG. 4B is a schematic diagram of environmental information of an image to be processed according to an embodiment.
FIG. 5 is a flowchart of acquiring environmental information, obtained by a first camera and a second camera, of an image to be processed according to an embodiment.
FIG. 6 is a flowchart of a method for image white balance according to another embodiment.
FIG. 7 is a flowchart of a method for image white balance according to another embodiment.
FIG. 8 is a structure block diagram of a device for image white balance according to an embodiment.
FIG. 9 is a schematic diagram of a shooting circuit according to an embodiment.

### DETAILED DESCRIPTION

For making purposes, technical solutions and advantages of the invention clearer, the invention will further be described below in combination with the drawings and the embodiments in detail. It should be understood that specific embodiments described herein are only adopted to explain the invention and not intended to limit the invention.

It can be understood that terms "first", "second" used in the invention may be configured in the invention to describe various components but are not intended to limit these components. These terms are only adopted to distinguish a first component from another component. For example, without departing from the scope of the invention, a first gain may be called a second gain. Similarly, the second gain may be called the first gain. The first gain and the second gain may both be gains but are not the same gain.

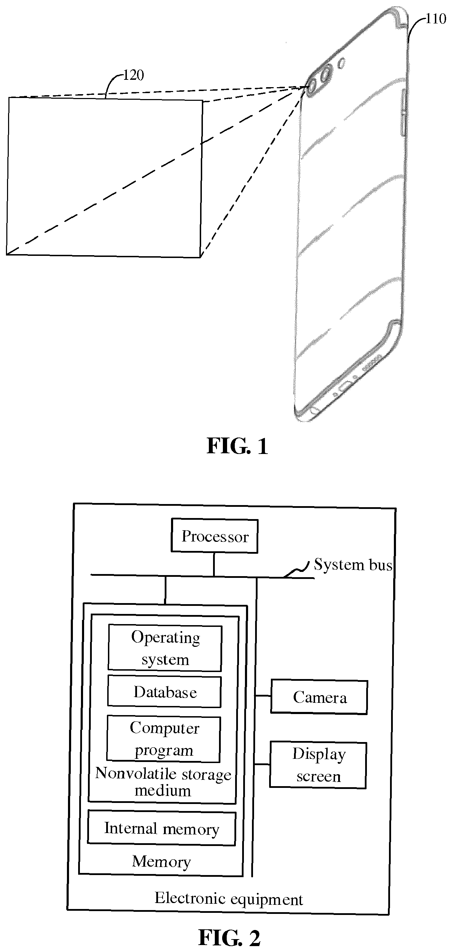

FIG. 1 is a diagram of an invention environment of a method for image white balance according to an embodiment. Referring to FIG. 1, electronic equipment 110 may call a first camera thereon to shoot, for example, scanning an object 120 in the environment in real time to obtain a frame image, and generate a shot image according to the frame image. The electronic equipment may include multiple cameras and the cameras are located at different parts on the electronic equipment, so that pictures shot by use of different cameras of the electronic equipment at the same position and moment are different. For example, the electronic equipment may be a mobile phone, and the first camera and a second camera may be a front camera and rear camera on the mobile phone respectively. Optionally, one or more cameras may also be double cameras, including a main camera module and an auxiliary camera module, and the image is shot and generated according to the main camera module and the auxiliary camera module. The electronic equipment may determine the frame image or the generated image as an image to be processed, acquire environmental information, obtained by the first camera and the second camera, of the image to be processed, calculate white balance data according to the environmental information and perform white balance processing on the image to be processed according to the white balance data.

FIG. 2 is an internal structure diagram of electronic equipment according to an embodiment. As shown in FIG. 2, the electronic equipment may include a processor, a memory, a display screen and a camera, all of which are connected by a system bus. The processor is configured to provide a capability of calculation and control to support running of the whole electronic equipment. The memory is configured to store data, a program or the like. At least one computer program is stored in the memory, and the computer program may be executed by the processor to implement a method for image white balance provided in the embodiments of the invention and applicable to the electronic equipment. The memory may include a nonvolatile storage medium such as a magnetic disk, a compact disc and a Read-Only Memory (ROM), a Random-Access-Memory (RAM) or the like. For example, in an embodiment, the memory includes a nonvolatile storage medium and an internal memory. The nonvolatile storage medium stores an operating system, a database and a computer program. Related data configured to implement the method for image white balance provided in each of the following embodiments is stored in the database. For example, data such as an image to be processed and environmental information may be stored. The computer program may be executed by the processor to implement the method for image white balance provided in each of the following embodiments. The internal memory provides a high-speed cache running environment for the operating system and computer program in the nonvolatile storage medium. The display screen may be a touch screen, for example, a capacitive screen or an electronic screen, is configured to display visual information such as the image to be processed, and may further be configured to detect a touch operation acting on the display screen and generate a corresponding instruction. The camera may include a first camera and a second camera, and pictures shot by use of different cameras of the electronic equipment at the same position and moment are different.

Those skilled in the art may know that a structure shown in FIG. 2 is only a block diagram of a part of structure related to the solutions of the invention and not intended to limit the electronic equipment to which the solutions of the invention are applied. The electronic equipment may specifically include components more or fewer than those shown in the figure, or some components are combined or different component arrangements are adopted. For example, the electronic equipment may further include a network interface connected by the system bus, through which the electronic equipment communicates with other equipment. For example, the electronic equipment may acquire data such as an image or white balance algorithm on the other equipment by the network interface.

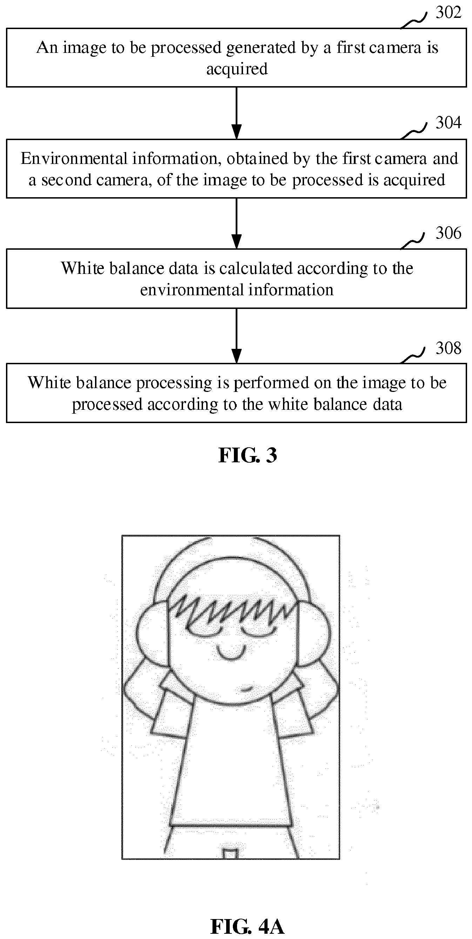

In an embodiment, as shown in FIG. 3, a method for image white balance is provided. Descriptions are made in the embodiment mainly for invention of the method to the electronic equipment shown in FIG. 2. The method includes the following operations.

In 302, an image to be processed generated by a first camera is acquired.

The image to be processed refers to an image required to be processed with a white balance processing. The image to be processed may be an image which has been shot and generated and may also be a frame image obtained by the camera in a shooting mode.

When the image to be processed is the frame image, the electronic equipment, when receiving an instruction for turning on the camera, may call the first camera to enter a shooting state. The first camera includes a main camera and an auxiliary camera. An object in a shooting environment may be scanned by the main camera and/or the auxiliary camera to form the frame image.

When the image to be processed is the image which has been shot and generated, the electronic equipment may receive a shooting instruction and generate the shot image according to a real-time frame image obtained by scanning, the generated image being the image to be processed. The shooting instruction may be a shooting instruction triggered by a detected related touch operation, a pressing operation over a physical button, a voice control operation or the like. The touch operation may be an operation such as a touch clicking operation, a touch long-pressing operation, a touch sliding operation or a multipoint touch operation. The electronic equipment may provide a shooting button configured to trigger shooting. When a clicking operation over the button is detected, the shooting instruction is triggered. The electronic equipment may also preset shooting voice information configured to trigger the shooting instruction. A voice receiving device is called to receive corresponding voice information. The voice information is parsed. When it is detected that the voice information is matched with the shooting voice information, the shooting instruction may be triggered.

In 304, environmental information, obtained by the first camera and a second camera, of the image to be processed is acquired.

The electronic equipment may also turn on the second camera before generating the image to be processed by the first camera or in a process of generating the image to be processed. That is, the first camera and the second camera cooperate to obtain more environmental information. The environmental information is information about an environment when the image to be processed is located and includes information about a scene in the image to be processed and surrounding of the scene. The environmental information may be presented in a form of an image or frame image data. Each pixel on the environmental information corresponds to a position in the environment, and a color presented by the pixel is a color, presented by the camera, of the corresponding position in the environment. When the environmental information is presented in the form of the image or frame image, the environmental information presents the environment where the image to be processed is located.

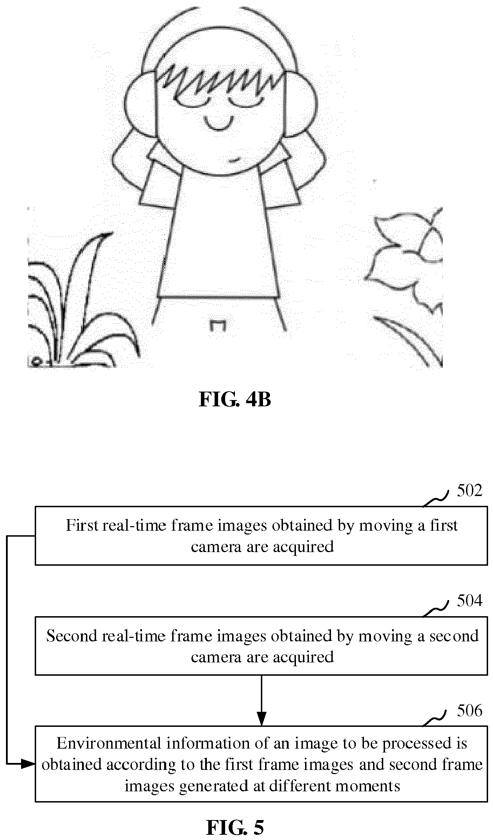

As shown in FIG. 4A and FIG. 4B, FIG. 4A is a schematic diagram of an image to be processed and FIG. 4B is a schematic diagram of environmental information of the image to be processed. A cartoon portrait is mainly presented in the image to be processed, and the environmental information includes the cartoon portrait and further includes information about plants on two sides of a body of the portrait, a white background on two sides of the head of the cartoon portrait or the like. It can be understood that a user, before the image to be processed is shot and generated, may turn on the first camera and the second camera for scanning to record and arrange the environmental information of the image to be processed. In an embodiment, the first camera and the second camera may further be moved to record and arrange more environmental information.

For example, for a mobile phone, the first camera may be a front camera and the second camera may be a rear camera. Alternatively, the first camera may be the rear camera and the second camera is the front camera.

In 306, white balance data is calculated according to the environmental information.

The white balance data is data required to be used when white balance processing is performed on the image to be processed. For example, the white balance data may be a gain of a color channel. The electronic equipment may calculate the white balance data according to the image to be processed and the environmental information. The environmental information usually includes a content presented in the image to be processed, and thus the white balance data may be obtained only according to environmental data.

In an embodiment, a white balance algorithm may be preset in the electronic equipment. The white balance algorithm may include one or more of a gray world algorithm, a perfect reflection algorithm, a global white balance algorithm and a local white balance algorithm. The electronic equipment may select one algorithm, take the environmental information (and the image to be processed) as input of the white balance algorithm and run the white balance algorithm to obtain the corresponding white balance data.

In 308, white balance processing is performed on the image to be processed according to the white balance data.

The image to be processed is formed by a plurality of pixels. Each of the pixels may be formed by multiple color channels. Each of the color channels represents a color component. For example, the image may be formed by three RGB channels, may also be formed by three Hue, Saturation and Value (HSV) channels and may further be formed by three Cyan, Magenta and Yellow (CMY) channels.

For each of the color channels on each of the pixels, the electronic equipment may correct a color value of a corresponding color channel according to the corresponding white balance data, thereby implementing white balance processing on the image to be processed to enable the corrected color value to reflect a true color of a corresponding shot object more accurately.

According to the method for image white balance, when an image is shot, the first camera and the second camera are simultaneously turned on, the image to be processed generated by the first camera is acquired, the environmental information, obtained by the first camera and a second camera, of the image to be processed is acquired, the white balance data is calculated according to the environmental information, and white balance processing is performed on the image to be processed according to the white balance data. In a shooting process, the second camera is also adopted for scanning, and the first camera and the second camera scan together to obtain the environmental information of the image to be processed, so that more reference information is provided for calculation of the white balance data, and accuracy of the calculated white balance data is improved. White balance processing is further performed on the image to be processed according to the white balance data, so that image white balance processing accuracy is also correspondingly improved.

In an embodiment, an execution sequence of operation 302 and operation 304 may not be limited. Operation 302 may be executed before operation 304 and may also be executed after operation 304 or operation 306. That is, before the image to be processed is acquired, the white balance data may be calculated at first, and the white balance data may be calculated according to the environmental information, so that white balance processing efficiency of the image to be processed may further be improved. For example, in a process that the cameras of the electronic equipment are moved for scanning, before the image to be processed is generated and shot, real-time environmental information may be obtained according to the first camera and the second camera, and the white balance data is calculated in real time according to the environmental information. In the scanning process, the first camera and the second camera may further be moved to acquire more environmental information. When the shooting instruction is received, the image to be processed is generated, and white balance processing is performed on the image to be processed by use of the latest calculated white balance data. Therefore, the white balance processing efficiency is improved.

In an embodiment, operation 304 includes that a third frame image generated by the second camera at a moment when the image to be processed is generated is acquired; and the third frame image and the image to be processed are determined as the environmental information.

The third frame image is a frame image obtained by the second camera at the moment when the image to be processed is generated. In the process of generating the image to be processed, the electronic equipment may usually be kept in a stable state for a period of time. Therefore, the third frame image obtained at the moment is also a relatively clear image. Determining both of the third frame image and the image to be processed as the environmental information may further improve clarity of the environmental information.

In an embodiment, the operation that the white balance data is calculated according to the environmental information includes that white pixels in the third frame image and the image to be processed are recognized; and the white balance data is calculated according to the white pixels.

For example, the color channels of a pixel are the three RGB channels. When a numerical value of each of the three RGB channels on the pixel is the same, a color presented by the pixel is white. The electronic equipment may detect whether numerical values of the three channels on each pixel are the same or approximately the same or not. The pixels of which the numerical values are the same or approximately the same are determined as white pixels. Herein, being approximately the same represents that differences or gains of the numerical values of the three channels are within a preset numerical value range. The gain represents a ratio of the numerical values of two color channels. The numerical values of each of three RGB channels are recorded as R, G and B respectively. When R=G=B on the same pixel, a color of the pixel is standard white. The channel G is taken as a reference, and the gain includes R/G=1.0 and B/G=1.0. When the gains R/G and B/G are both within the preset numerical value range, it is determined that the numerical values R, G and B of the three channels are approximately the same, that is, it is determined that the color of the pixel is approximately white.

In an embodiment, the electronic equipment may acquire each of color channels on each of white pixel in the third frame image and the image to be processed, calculate an average gain of the white pixels and determine the average gain as the white balance data. Optionally, the numerical values of the same color channels in the color channels on the white pixels may be summed, the average gain, for example, R/G_average and B/G_average, is calculated according to a sum of the numerical values of color channels, and the average gain is the white balance data.

In the abovementioned embodiments, the white balance data is calculated according to the white pixels in the environmental information, so that calculation accuracy of the white balance data may further be improved.

In an embodiment, the operation that the white balance data is calculated according to the white pixels includes that: a proportion of all the white pixels in the third frame image and the image to be processed is detected; and the white balance data is calculated according to a white balance calculation model corresponding to the proportion.

White balance data required by different white balance calculation models is not always the same. White balance calculation models applied to different shooting environments are also not always the same. Multiple white balance calculation models are preset in the electronic equipment. For example, calculation models including the gray world algorithm, the perfect reflection algorithm, the global white balance algorithm and the local white balance algorithm may be preset. For different calculation models, the electronic equipment further sets a correspondence between a proportion of white pixels in a panoramic image and a related calculation model so as to acquire the corresponding calculation models to calculate the white balance data under different proportions and perform white balance processing on the image to be processed according to the corresponding calculation models and the white balance data.

The electronic equipment may calculate the white point number of the white pixels in the third frame image and the image to be processed and the total number of pixels in the third frame image and the image to be processed, and a ratio of the white point number to the total number is the proportion of the white pixels in the panoramic image. Furthermore, correspondences between different white balance calculation models and proportion ranges of white pixels may be set. For example, the proportion of the white pixels in the third frame image and the image to be processed corresponds to a white balance calculation model A when being A%-B%, and corresponds to a white balance calculation model B when being B%∼C%. Optionally, the proportion range and the corresponding calculation model may be set by experience to ensure that the white balance calculation model selected according to the correspondence is a calculation model most applicable to white balance processing over the image to be processed.

In an embodiment, the white balance data includes a first gain and a second gain. The operation that the white balance data is calculated according to the white pixels includes that: a pixel average of pixels on all the white pixels is calculated and a first gain of the first color channels and a second gain of the second color channels are calculated according to the pixel average. The operation that white balance processing is performed on the image to be processed according to the white balance data includes that: white balance correction is performed on the first color channel of each of the pixels in the image to be processed according to the first gain and white balance correction is performed on the second color channel of each of the pixels in the image to be processed according to the second gain.

A gain represents a ratio of numerical values of two color channels. The first gain and the second gain represent, when one color channel is taken as a reference, proportions of the numerical values of the other two color channels and the numerical value of the reference color channel respectively. Descriptions will be made also with the condition that the color channels are the three RGB channels as an example. R/B_average and B/G_average may be the first gain and the second gain, i.e., a gain of the R channel and a gain of the G channel. The electronic equipment averages the same color channels of the determined white pixels for each of color channels to obtain an average of each of color channels, the averages being the pixel average. It can be understood that the pixel average may include an R average, a G average and a B average. The G channel is taken as a reference, and R/B_average and B/G_average are obtained by dividing the R average by the G average and dividing the B average by the G average respectively.

The electronic equipment may multiply the R channel of each of pixels on the image to be processed by R/G_average and multiply the B channel by a reciprocal value of B/G_average, thereby implementing color correction on the image to be processed and implementing white balance processing on the image to be processed.

In the abovementioned embodiments, the environmental information is analyzed to obtain the white pixels in the whole environment where the image to be processed is located, so that comprehensiveness of acquisition of the white pixels may be improved. The first gain and the second gain are further obtained according to the white pixels, and white balance processing is performed on the image to be processed according to the first gain and the second gain, so that the white balance processing accuracy of the image to be processed is improved.

In an embodiment, as shown in FIG. 5, operation 304 includes the following sub-operations.

In 502, first real-time frame images obtained by moving the first camera are acquired.

In 504, second real-time frame images obtained by moving the second camera are acquired.

The electronic equipment may generate frame images in real time according to a frame rate. The frame rate may be a frame rate which is fixedly set and may also be a frame rate which is adaptively determined according to information such as luminance of the present environment. For example, frame images may be generated in real time according to a frame rate of 30 frames per second. Optionally, frame rates of the first camera and the second camera may not always be the same. In a processing of generating frame images in real time, the first camera and the second camera may be moved, so that frame images generated at different moments are not always the same. For example, the first camera and the second camera may be moved by moving the electronic equipment. The electronic equipment may include information of each of the first frame images and second frame images in the environmental information.

In 506, the environmental information of the image to be processed is obtained according to the first frame images and second frame images generated at different moments.

Complete environmental information is obtained by the frame images generated at different moments. Alternatively, image regions, different from image information in the previously generated frame images, in the frame images generated at different moments may be extracted and included in the environmental information. Thus, the environmental information may include space information of the image to be processed and the space information is not duplicated.

In an embodiment, the operation that the environmental information of the image to be processed is obtained according to the frame images generated at different moments includes that: the first frame images and second frame images generated at different moments are compared with each other to obtain the environmental information of the image to be processed.

The electronic equipment may only compare the first frame images generated at different moments and compare the second frame images generated at different moments to obtain the environmental information of the image to be processed. Comparison only between the first frame images or comparison only between the second frame images may reduce a comparison frequency and improve acquisition efficiency of the environmental information. Alternatively, the first frame images may also be compared with the second frame images to obtain the environmental information of the image to be processed, so that the obtained environmental information is more accurate.

For the first frame images or the second frame images, the electronic equipment may extract color channels of pixels in each of the frame images, compare image picture between a present frame and a preset number of frame images before the present frame to recognize unduplicated regions of the present frame relative to pictures of the preset number of frame images before the present frame, further analyze a positional relationship of each of unduplicated regions in the whole space and form the environmental information of the image to be processed according to the unduplicated regions and the positional relationship. The environmental information may be presented in a form of the frame image data. That is, the environmental information may be a panoramic image synthesized by the detected unduplicated region in the frame images and a spatial position of the region in the whole environment. The cameras are moved to obtain the real-time frame images and the environmental information of the image to be processed is obtained according to the frame images generated at different moments, so that the acquired environmental information is larger in information amount.

Optionally, the electronic equipment compares a different region of pictures between adjacent frame images according to a space scene modeling algorithm when a picture moves. The electronic equipment determines a space coordinate of the camera in the whole shooting scene according to a position of the different region in the corresponding frame image, the space coordinate including a linear coordinate and an angle coordinate. A coordinate position between each region in the shooting scene and the camera may be obtained according to the determined space coordinate, thereby obtaining the environmental information according to the coordinate position and different pictures in each frame image. A shot region in the image to be processed is in the shooting scene. In an embodiment, the space scene modeling algorithm may be a Simultaneous Localization And Mapping (SLAM) algorithm. The electronic equipment generates a frame image in a camera moving process, constructs the space information of the space where the camera is located in the present shot picture according to the frame image and the preset SLAM algorithm and records the environmental information as much as possible according to the space information for white balance processing according to the environmental information.

In an embodiment, the operation that the environmental information of the image to be processed is obtained according to the first frame images and second frame images generated at different moments includes that: a motion detection component is called to detect movement data of the cameras during generation of each of frame images; and the environmental information of the image to be processed is obtained from the first frame images and the second frame images according to the movement data.

The motion detection component is a component applied to detection of a motion state of the equipment and may include, but not limited to, a gyroscope, an acceleration sensor or a gravity sensing device. The electronic equipment may call the built-in motion detection component to calculate the movement data of the cameras in the movement process. The movement data may include one or more combinations of a movement velocity, a movement distance, a movement angle or the like. Usually, the movement data of the first camera is the same as that of the second camera. Relative movement data of the camera relative to a moment when a reference frame is shot at a moment when each frame image is shot is calculated according to the shooting frame rate. The relative movement data is the movement data of the camera relative to the moment when the reference frame is shot at a present moment. The reference frame may be a frame image when the environmental information is recorded at first or any frame image in the frame images configured to participate in recording of the environmental information. A positional relationship between picture information of the presently shot frame image and picture information of the reference frame in the space may be calculated according to the relative movement data. It can be understood that the picture information may have a duplicated part. All the environmental information obtained by the cameras may be obtained from the frame images generated at different moments.

In an embodiment, operation 308 includes that: a panoramic image is generated according to the environmental information; white pixels in the panoramic image are recognized; and the white balance data is calculated according to the white pixels.

The environmental information of the image to be processed is obtained according to the first frame images and second frame images generated at different moments. The electronic equipment may synthesize an image according to the pixels and positional relationship between the pixels in the environmental information. Since the environmental information is obtained by moving the cameras, the synthesized image is approximately a panoramic image.

The electronic equipment may calculate an average gain of the white pixels for each color channel on each white pixel in the panoramic image and determine the average gain as the white balance data. The panoramic image is generated by the environmental information and then the white balance data is calculated according to the white pixels in the panoramic image, so that the calculation accuracy of the white balance data may further be improved.

In an embodiment, the operation that the white balance data is calculated according to the white pixels includes that: a proportion of all the white pixels in the panoramic image is detected; and the white balance data is calculated according to a white balance calculation model corresponding to the proportion.

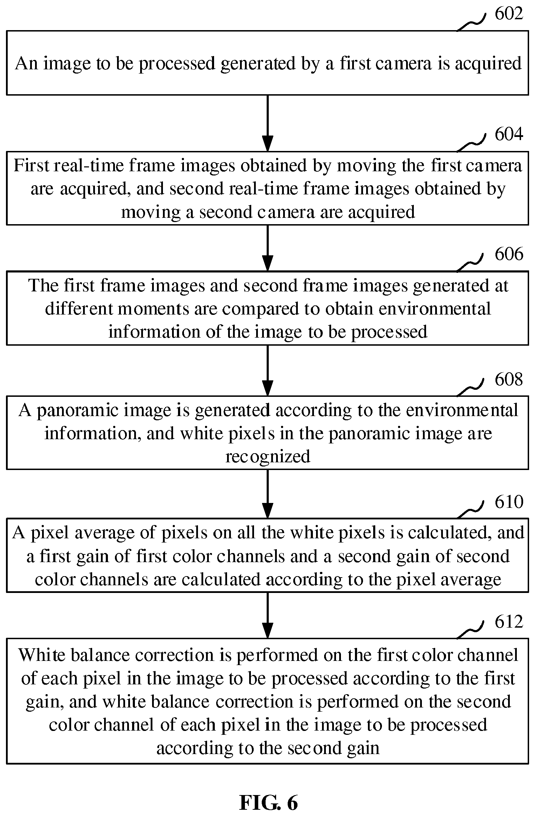

In an embodiment, as shown in FIG. 6, another method for image white balance is provided. The method includes the following operations.

In 602, an image to be processed generated by a first camera is acquired.

Optionally, the image to be processed may be an image generated in real time in a shooting mode or may be a frame image displayed on a display screen in real time according to a preset frame rate.

In 604, first real-time frame images obtained by moving the first camera are acquired, and second real-time frame images obtained by moving a second camera are acquired.

Electronic equipment displays prompting information of moving the cameras on the display screen in the shooting mode to prompt a user to move the cameras. It can be understood that multiple display manners for the prompting information and multiple data formats for the prompting information may be adopted. For example, text prompting information like "Move the camera left and right" may be displayed. Alternatively, a sign, for example, a figure or a symbol, configured to represent leftward and rightward movement may be displayed. For example, an arrowhead representing leftward and rightward movement may be displayed. The electronic equipment, before acquiring the image to be processed, may cache the frame images obtained in real time in the shooting mode.

Optionally, the camera may be moved in any directions such as leftward and rightward directions, upward and rightward directions and forward and backward directions, and for example, may be rotated leftwards and rightwards at a fixed position. If a movement range of the camera is wider, richer environmental information may be acquired. Consequently, white balance processing has higher accuracy. For example, the user may hold the electronic equipment to perform environment scanning on a scene to be shot before the image to be processed is shot. For example, the electronic equipment may be rotated by 180°, and when the first camera and the second camera are a front camera and a rear camera respectively, the environmental information of the whole space may be obtained. In a movement process of the electronic equipment, the first frame images and the second frame images may be generated in real time according to the preset frame rate.

In 606, the first frame images and second frame images generated at different moments are compared to obtain environmental information of the image to be processed.

Optionally, the frame images participating in extraction of the environmental information may be the first frame images and second frame images acquired within a preset duration before generation time of the image to be processed or be the first frame images and second frame images generated when the shooting mode is not terminated in a process of shooting the image to be processed.

The electronic equipment may perform image picture comparison on every two adjacent frame images to recognize unduplicated regions of a present frame relative to pictures of a preset number of frame images before the present frame, analyze a positional relationship of each unduplicated region in the whole space and form the environmental information of the image to be processed according to the unduplicated regions and the positional relationship. The present frame image includes a present first frame image and a present second frame image.

In an embodiment, the electronic equipment may construct the whole space information of a shooting scene of the image to be processed according to a preset SLAM algorithm and according to the first frame images and second frame images which are shot in a movement shooting process. The electronic equipment may record the environmental information as much as possible according to the space information so as to perform white balance processing according to the environmental information.

In 608, a panoramic image is generated according to the environmental information, and white pixels in the panoramic image are recognized.

The unduplicated regions are also formed by corresponding pixels. The positional relationship between the unduplicated regions also determines a positional relationship between pixels. The panoramic image may be synthesized according to the pixels and the positional relationship. It can be understood that the camera may be moved not in a regular manner, the synthesized panoramic image is not always a complete rectangle and pixels in a certain region may miss.

For example, color channels of the pixel are three RGB channels. The electronic equipment may calculate a first gain and second gain on each of the pixels. For example, R/G and B/G are calculated. When R/G and B/G are both within a preset numerical value range, it is determined that the pixel is a white pixel. The numerical value range may be any proper range. For example, the numerical value range may be 0.8-1.2. When 0.8<R/G<1.2 and 0.8<B/G<1.2, it is determined that the pixel is a white pixel.

In 610, a pixel average of pixels on all the white pixels is calculated, and a first gain of first color channels and a second gain of second color channels are calculated according to the pixel average.

The electronic equipment may calculate the pixel average of the pixels which are determined as the white pixels to obtain an average of each color channel, i.e., the pixel average. One color channel is taken as a reference, gains of the other two color channels relative to the reference color channels are the first gain and the second gain. For example, a G channel is taken as a reference, and a gain R/G_average of an R channel and a gain B/G_average of a B channel are the first gain of the first color channel and the second gain of the second color channel respectively.

In 612, white balance correction is performed on the first color channel of each pixel in the image to be processed according to the first gain, and white balance correction is performed on the second color channel of each pixel in the image to be processed according to the second gain.

Optionally, the electronic equipment may multiply the R channels in the image to be processed by R/G_average and multiply the B channels by a reciprocal value of B/G_average to implement white balance correction on the first color channels and the second color channels and implement white balance processing on the image to be processed.

According to the method for image white balance, when an image is shot, the environmental information, obtained in advance by moving the first camera and the second camera for scanning, of the image to be processed is acquired, and the white balance data is calculated according to the environmental information. Since the environmental information of the shot image to be processed is introduced, more reference information is provided for calculation of the white balance data, and accuracy of the calculated white balance data is improved. White balance processing is further performed on the image to be processed according to the white balance data, so that white balance processing accuracy of the image is also correspondingly improved.

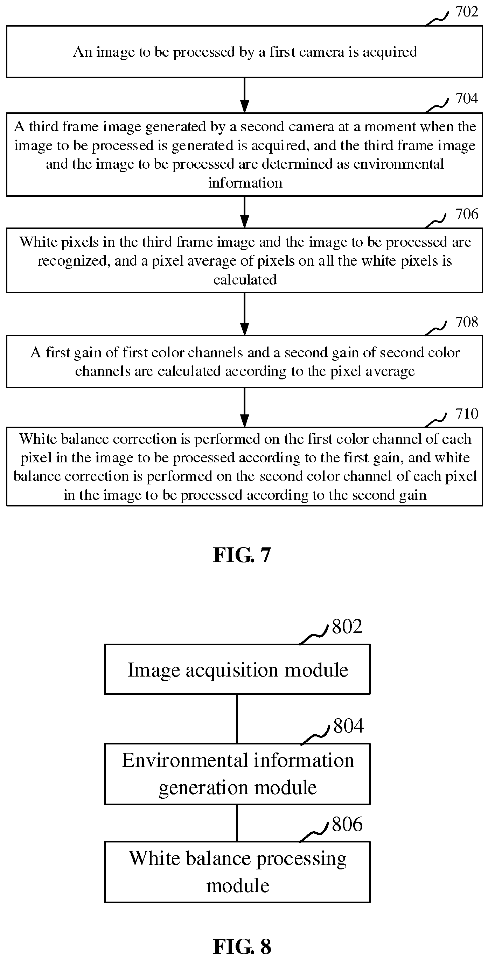

In an embodiment, as shown in FIG. 7, another method for image white balance is provided. The method includes the following operations.

In 702, an image to be processed generated by a first camera is acquired.

In 704, a third frame image generated by a second camera at a moment when the image to be processed is generated is acquired, and the third frame image and the image to be processed are determined as environmental information.

In 706, white pixels in the third frame image and the image to be processed are recognized, and a pixel average of pixels on all the white pixels is calculated.

In 708, a first gain of first color channels and a second gain of second color channels are calculated according to the pixel average.

In 710, white balance correction is performed on the first color channel of each of pixels in the image to be processed according to the first gain, and white balance correction is performed on the second color channel of each of the pixels in the image to be processed according to the second gain.

According to the method for image white balance, the first camera and the second camera participate in generation of the environmental information, and the image to be processed generated by the first camera and the third frame image generated by the second camera are both determined as the environmental information, so that more environmental information may be used for white balance processing, and white balance processing efficiency of the image is improved.

In an embodiment, as shown in FIG. 8, a device for image white balance is provided. The device includes an image acquisition module 802, an environmental information generation module 804 and a white balance processing module 806.

The image acquisition module 802 is configured to acquire an image to be processed generated by a first camera.

The environmental information generation module 804 is configured to acquire environmental information, obtained by the first camera and a second camera, of the image to be processed.

The white balance processing module 806 is configured to calculate white balance data according to the environmental data and perform white balance processing on the image to be processed according to the white balance data.

In an embodiment, the environmental information generation module 804 is further configured to acquire a third frame image generated by the second camera at a moment when the image to be processed is generated and determine the third frame image and the image to be processed as the environmental information.

In an embodiment, the white balance processing module 806 is further configured to recognize white pixels in the third frame image and the image to be processed and calculate the white balance data according to the white pixels.

In an embodiment, the white balance processing module 806 is further configured to detect a proportion of all the white pixels in the third frame image and the image to be processed and calculate the white balance data according to a white balance calculation model corresponding to the proportion.

In an embodiment, the white balance data includes a first gain and a second gain. The white balance processing module 806 is further configured to calculate a pixel average of pixels on all the white pixels, calculate the first gain of first color channels and the second gain of second color channels according to the pixel average, perform white balance correction on the first color channel of each pixel in the image to be processed according to the first gain and perform white balance correction on the second color channel of each pixel in the image to be processed according to the second gain.

In an embodiment, the environmental information generation module 804 is further configured to acquire first real-time frame images obtained by moving the first camera, acquire second real-time frame images obtained by moving the second camera and obtain the environmental information of the image to be processed according to the first frame images and second frame images generated at different moments.

In an embodiment, the environmental information generation module 804 is further configured to compare the first frame images generated at different moments and compare the second frame images generated at different moments to obtain the environmental information of the image to be processed.

In an embodiment, the environmental information generation module 804 is further configured to call a motion detection component to detect movement data of the cameras during generation of each frame image and obtain the environmental information of the image to be processed from the first frame images and the second frame images according to the movement data.

Division of modules in the device for image white balance is only adopted for exemplary description. In another embodiment, the device for image white balance may be divided into different modules according to a requirement to realize part or all of functions of the device for image white balance.

In an embodiment, a computer-readable storage medium is provided, on which a computer program is stored. The computer program is executed by a processor to implement the operations of the method for image white balance provided in each of the abovementioned embodiments.

In an embodiment, electronic equipment is further provided, which includes a memory, a processor and a computer program stored in the memory and capable of running on the processor. The processor executes the computer program to implement the operations of the method for image white balance provided in each of the abovementioned embodiments.

An embodiment of the invention further provides a computer program product. The computer program product includes an instruction runs on a computer to enable the computer to execute the operations of the method for image white balance provided in each of the abovementioned embodiments.

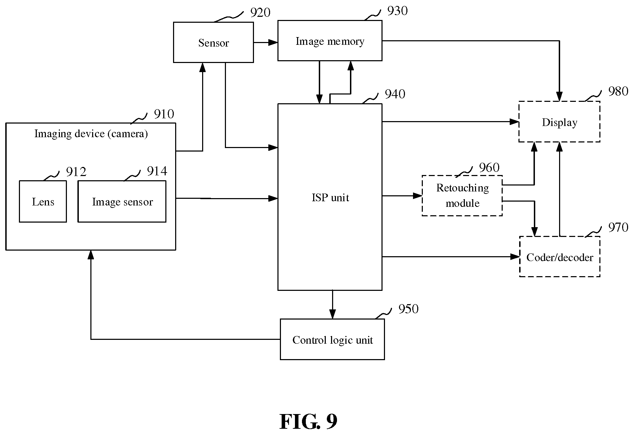

An embodiment of the invention further provides electronic equipment. The electronic equipment includes a shooting circuit, and the shooting circuit may be implemented by use of a hardware and/or software component, and may include various processing units defining an Image Signal Processing (ISP) pipeline. FIG. 9 is a schematic diagram of a shooting circuit according to an embodiment. As shown in FIG. 9, each aspect of a shooting technology related to the embodiments of the invention is shown only, for convenient description.

As shown in FIG. 9, the shooting circuit includes an ISP unit 940 and a control logic unit 950. Image data captured by imaging device 910 is processed by the ISP unit 940 at first, and the ISP unit 940 analyzes the image data to capture image statistical information configurable to determine one or more control parameters of the ISP unit and/or the imaging device 910. The imaging device 910 may include a camera with one or more lenses 912 and an image sensor 914. The image sensor 914 may include a color filter array (for example, a Bayer filter), and the image sensor 914 may acquire light intensity and wavelength information captured by each imaging pixel of the image sensor 914 and provide a set of original image data processible for the ISP unit 940. The sensor 920 (for example, a gyroscope) may provide an acquired shooting parameter (for example, an anti-shake parameter) for the ISP unit 940 on the basis of an interface type of the sensor 920. An interface of the sensor 920 may adopt a Standard Mobile Imaging Architecture (SMIA) interface, another serial or parallel camera interface or a combination of the interfaces.

In addition, the image sensor 914 may also send original image data to the sensor 920. The sensor 920 may provide the original image data for the ISP unit 940 on the basis of the interface type of the sensor 920. Alternatively, the sensor 920 stores the original image data in an image memory 930.

The ISP unit 940 processes the original image data pixel by pixel according to multiple formats. For example, each image pixel may have a bit depth of 9, 10, 12 or 14 bits. The ISP unit 940 may execute one or more shooting operations on the original image data and collect the statistical information about the image data. The shooting operations may be executed according to the same or different bit depth accuracy.

The ISP unit 940 may further receive the image data from the image memory 930. For example, the interface of the sensor 920 sends the original image data to the image memory 930, and the original image data in the image memory 930 is provided for the ISP unit 940 for processing. The image memory 930 may be a part of a memory device, storage equipment or an independent dedicated memory in electronic equipment, and may include a Direct Memory Access (DMA) feature.

When receiving the original image data from the interface of the image sensor 914 or from the sensor 920 or from the image memory 930, the ISP unit 940 may execute the one or more shooting operations, for example, time-domain filtering. The processed image data may be sent to the image memory 930 for other processing before displaying. The ISP unit 940 may further receive the processed data from the image memory 930 and perform image data processing in an original domain and color spaces RGB and YCbCr on the processed data. The processed image data may be output to a display 980 for a user to view and/or for further processing by a Graphics Processing Unit (GPU). In addition, output of the ISP unit 940 may further be sent to the image memory 930, and the display 980 may read the image data from the image memory 930. In an embodiment, the image memory 930 may be configured to implement one or more frame buffers. Moreover, the output of the ISP unit 940 may be sent to a coder/decoder 970 to code/decode the image data. The coded image data may be stored, and is decompressed before being displayed on the display 980.

The step that the ISP unit 940 processes the image data includes that: Video Front End (VFE) processing and Camera Post Processing (CPP) are performed on the image data. The VFE processing on the image data may include correction of a contrast or luminance of the image data, modification of lighting state data recorded in a digital manner, compensation processing (for example, white balance, automatic gain control and γ correction) on the image data, filtering processing on the image data or the like. The CPP on the image data may include image scaling and provision of a preview frame and a recording frame for each path. Wherein, for CPP, different codecs may be adopted to process the preview frame and the recording frame. The image data processed by the ISP unit 940 may be sent to a retouching module 960 for retouching processing on the image before displaying. Retouching processing executed on the image data by the retouching module 960 may include: whitening, freckle removal, buffing, face-lift, acne removal, eye widening or the like. Wherein, the retouching module 960 may be a Central Processing Unit (CPU), GPU, coprocessor or the like in a mobile terminal. The data processed by the retouching module 960 may be sent to a coder/decoder 970 to code/decode the image data. The coded image data may be stored, and is decompressed before being displayed on the display 980. Wherein, the retouching module 960 may further be located between the coder/decoder 970 and the display 980, that is, the retouching module performs retouching processing on the formed image. The coder/decoder 970 may be a CPU, GPU, coprocessor or the like in the mobile terminal.

The statistical information determined by the ISP unit 940 may be sent to the control logic unit 950. For example, the statistical information may include statistical information of automatic exposure, automatic white balance, automatic focusing, flashing detection, black level compensation, shading correction of the lens 912 or the like of the image sensor 914. The control logic unit 950 may include a processor and/microcontroller executing one or more routines (for example, firmware), and the one or more routines may determine the control parameter of the imaging device 910 and the control parameter of the ISP unit 940 according to the received statistical data. For example, the control parameter of the imaging device 910 may include a control parameter (for example, integral time for gain and exposure control) for the sensor 920, a camera flashing control parameter, a control parameter (for example, a focal length for focusing or zooming) for the lens 912 or a combination of these parameters. The control parameter for the ISP unit may include a gain level and color correction matrix configured for automatic white balance and color regulation (for example, during RGB processing) and a shading correction parameter for the lens 912.

The abovementioned image white balance processing method may be implemented by use of the shooting technology in FIG. 9.

Any citation of a memory, storage, database or another medium used in the invention may include nonvolatile and/or nonvolatile memories. A proper nonvolatile memory may include a ROM, a Programmable ROM (PROM), an Electrically Programmable ROM (EPROM), an Electrically Erasable Programmable ROM (EEPROM) or a flash memory. The volatile memory may include a RAM, and is used as an external high-speed buffer memory. Exemplarily but unlimitedly, the RAM may be obtained in various forms, for example, a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), a Rambus Direct RAM (RDRAM), a Direct RDRAM (DRDRAM) and a Rambus Dynamic RAM (RDRAM).

The abovementioned embodiments only describe in detail some implementation modes of the invention and not thus understood as limits to the patent scope of the invention. It should be pointed out that those of ordinary skill in the art may further make a plurality of transformations and improvements without departing from the concept of the invention and all of them fall within the scope of protection of the invention. Therefore, the scope of patent protection of the invention should be subject to the appended claims.

## Claims

1. A method for image white balance, comprising:
acquiring (302) an image to be processed generated by a first camera;
acquiring (304) environmental information, obtained by the first camera and a second camera, of the image to be processed;
calculating (306) white balance data according to the environmental information; and
performing (308) white balance processing on the image to be processed according to the white balance data.

2. The method according to claim 1, wherein acquiring the environmental information, obtained by the first camera and the second camera, of the image to be processed comprises:
acquiring (704) a third frame image generated by the second camera at a moment when the image to be processed is generated; and
determining the third frame image and the image to be processed as the environmental information.

3. The method according to claim 2, wherein calculating the white balance data according to the environmental information comprises:
recognizing (706) white pixels in the third frame image and the image to be processed; and
calculating the white balance data according to the white pixels.

4. The method according to claim 3, wherein calculating the white balance data according to the white pixels comprises:
detecting a proportion of all the white pixels in the third frame image and the image to be processed; and
calculating the white balance data according to a white balance calculation model corresponding to the proportion.

5. The method according to claim 3, wherein the white balance data comprises a first gain and a second gain; and
wherein calculating the white balance data according to the white pixels comprises:
calculating a pixel average of pixels on all the white pixels, and
calculating the first gain of first color channels and the second gain of second color channels according to the pixel average; and
wherein performing white balance processing on the image to be processed according to the white balance data comprises:
performing white balance correction on the first color channel of each pixel in the image to be processed according to the first gain, and
performing white balance correction on the second color channel of each pixel in the image to be processed according to the second gain.

6. The method according to any one of claims 1-5, wherein acquiring the environmental information, obtained by the first camera and the second camera, of the image to be processed comprises:
acquiring first real-time frame images obtained by moving the first camera;
acquiring second real-time frame images obtained by moving the second camera; and
obtaining the environmental information of the image to be processed according to the first frame images and second frame images generated at different moments.

7. The method according to claim 6, wherein obtaining the environmental information of the image to be processed according to the first frame images and second frame images generated at different moments comprises:
comparing the first frame images generated at different moments and comparing the second frame images generated at different moments to obtain the environmental information of the image to be processed.

8. The method according to claim 6, wherein obtaining the environmental information of the image to be processed according to the first frame images and second frame images generated at different moments comprises:
calling a motion detection component to detect movement data of the first and second cameras during generation of each frame image; and
obtaining the environmental information of the image to be processed from the first frame images and the second frame images according to the movement data.

9. A device for image white balance, comprising:
an image acquisition module (802), configured to acquire an image to be processed generated through a first camera;
an environmental information generation module (804), configured to acquire environmental information, obtained through the first camera and a second camera, of the image to be processed; and
a white balance processing module (806), configured to calculate white balance data according to the environmental data and perform white balance processing on the image to be processed according to the white balance data.

10. The device according to claim 9, wherein the environmental information generation module (804) is further configured to acquire a third frame image generated by the second camera at a moment when the image to be processed is generated; and determine the third frame image and the image to be processed as the environmental information.

11. The device according to claim 10, wherein the white balance processing module (806) is further configured to recognize white pixels in the third frame image and the image to be processed; and calculate the white balance data according to the white pixels.

12. The device according to claim 11, wherein the white balance processing module (806) is further configured to detect a proportion of all the white pixels in the third frame image and the image to be processed; and calculate the white balance data according to a white balance calculation model corresponding to the proportion.

13. The device according to any one of claims 9-12, wherein the environmental information generation module (804) is further configured to acquire first real-time frame images obtained by moving the first camera; acquire second real-time frame images obtained by moving the second camera; and obtain the environmental information of the image to be processed according to the first frame images and second frame images generated at different moments.

14. The device of claim 13, wherein the environmental information generation module (804) is further configured to compare the first frame images generated at different moments and compare the second frame images generated at different moments to obtain the environmental information of the image to be processed; or
wherein the environmental information generation module (804) is further configured to call a motion detection component to detect movement data of the first and second cameras during generation of each frame image; and obtain the environmental information of the image to be processed from the first frame images and the second frame images according to the movement data.

15. A computer-readable storage medium, having a computer program stored therein, wherein the computer program is executed by a processor to implement the steps of the method according to any one of claims 1-8.
